(19) Europäisches Patentamt
European Patent Office
Office européen des brevets

(11) **EP 1 813 770 B1**

(12) **FASCICULE DE BREVET EUROPEEN**

(45) Date de publication et mention
de la délivrance du brevet:
**11.12.2013 Bulletin 2013/50**

(51) Int Cl.:
*F01D 5/02* *(2006.01)* *F02K 3/02* *(2006.01)*
*F02C 7/32* *(2006.01)* *F02C 7/36* *(2006.01)*

(21) Numéro de dépôt: **07101191.0**

(22) Date de dépôt: **25.01.2007**

(54) **Système de fixation d'arbre moteur avec écrou tendeur**

Befestigungssystem einer Antriebswelle mit einer Spannmutter

Fastening system for an engine shaft with a clamping nut

(84) Etats contractants désignés:
**DE FR GB IT**

(30) Priorité: **27.01.2006 FR 0650293**

(43) Date de publication de la demande:
**01.08.2007 Bulletin 2007/31**

(73) Titulaire: **SNECMA**
**75015 Paris (FR)**

(72) Inventeurs:
• **GALIVEL, Jean-Pierre**
**77176, SAVIGNY LE TEMPLE (FR)**

• **SERVANT, Régis**
**91720, VIGNEUX SUR SEINE (FR)**

(74) Mandataire: **David, Daniel et al**
**Gevers France**
**41, avenue de Friedland**
**75008 Paris (FR)**

(56) Documents cités:
**EP-A- 0 987 457  DE-B- 1 087 410**
**FR-A- 2 633 023  US-A- 3 602 535**

EP 1 813 770 B1

**Description**

La présente invention se rapporte à un moteur à turbine à gaz, en particulier dans le domaine aéronautique, et vise le montage d'un arbre de rotor à l'intérieur du moteur.

Les opérations de montage et de démontage d'un turbomoteur sont délicates, en raison du nombre de pièces qui les composent et des faibles jeux entre elles alors que les dimensions peuvent être importantes. Le coût des interventions sur le moteur comportant de telles opérations est de ce fait toujours élevé. On cherche donc en permanence à les simplifier. Dans un moteur à turbosoufflante avant et à double corps, comme le moteur cfm56, l'accès au palier support de l'arbre du compresseur haute pression est particulièrement difficile car il est monté, au niveau du carter intermédiaire, en arrière de la soufflante et des deux premiers paliers supportant respectivement l'arbre du compresseur basse pression et celui de la soufflante. Le carter intermédiaire est la partie du carter de la machine qui supporte notamment les paliers avant des rotors. Afin d'éviter le démontage de toute la partie avant du moteur et de la soufflante en particulier, les éléments de ce palier sont agencés actuellement de manière à permettre le montage par l'arrière. Une telle solution est avantageuse mais présente encore quelques inconvénients qu'il serait souhaitable d'éliminer.

Le brevet US3602535 décrit un dispositif d'accouplement de deux arbres ; l'arbre de compresseur et l'arbre de turbine d'un moteur à turbine à gaz. On rapproche les deux arbres l'un à l'autre par rotation d'un écrou autour de son axe. Un verrou placé dans l'arbre de turbine empêche la rotation de l'écrou après sa mise en place.

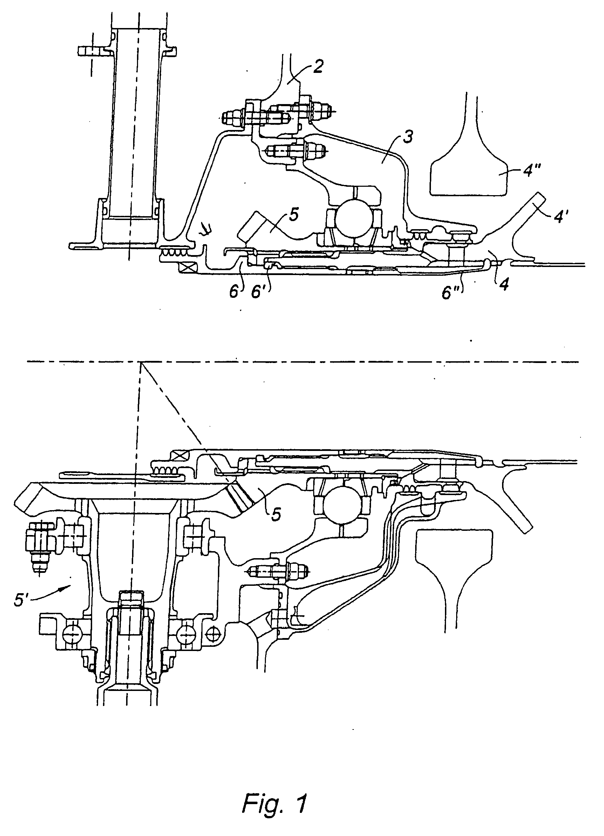

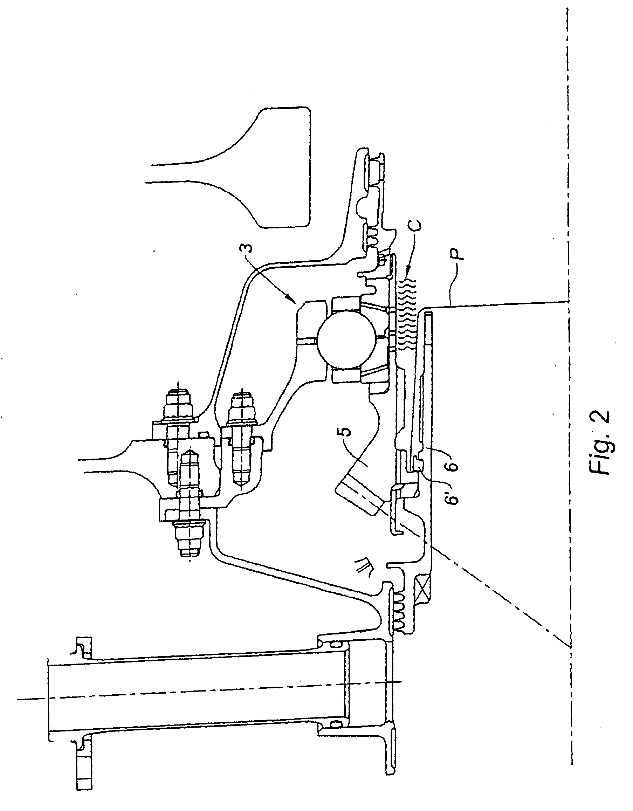

En référence aux figures 1 et 2, on rappelle une solution correspondant à l'enseignement de l'art antérieur. L'ensemble du moteur n'est pas représenté, seul l'environnement immédiat du palier est visible. L'avant et l'arrière sont définis par rapport à la direction d'avance du moteur. On voit une partie de la structure fixe du carter intermédiaire 2, le palier 3 à billes de l'arbre du compresseur HP, est supporté par sa bague extérieure dans cette structure fixe. Le palier supporte en rotation l'extrémité avant de l'arbre 4 du compresseur HP dont on voit le tourillon 4' et un disque de rotor 4". Le palier supporte à l'avant un pignon conique 5 qui entraîne le pignon 5' lié à un arbre radial et formant la boîte à engrenages dite IGB à partir de laquelle des équipements auxiliaires sont entraînés : pompes, générateurs de courant électriques ou autres. Le pignon conique 5 engrène dans ce but avec le pignon de l'arbre de transmission radial qui est logé dans l'un des bras radiaux du carter intermédiaire pour entraîner les pignons de la boîte à engrenages des auxiliaires, connue sous le sigle AGB (pour  accessory gear box). Le pignon conique est solidaire du manchon cylindrique supporté par le palier.

Pour maintenir l'arbre 4 dans le palier 3, on prévoit conformément à l'enseignement de l'art antérieur un écrou 6 qui est retenu à l'intérieur du pignon 5, à l'amont par un segment ou jonc 6'. L'écrou comprend un filetage sur sa surface externe par lequel il est vissé à l'intérieur de l'extrémité amont de l'arbre 4, pourvue d'un filetage approprié. Un frein d'écrou 6" assure le maintien en place de l'écrou dans l'arbre 4. Par ailleurs des cannelures axiales sur la paroi interne du manchon du pignon 5 coopèrent avec des cannelures sur la surface externe de l'arbre 4 pour empêcher toute rotation de l'un par rapport à l'autre. Ce montage intègre la fonction d'auto extraction du compresseur HP. La fonction est assurée par le segment qui solidarise axialement l'écrou de palier à la roue conique. Ainsi en vissant l'écrou dans le filetage de l'arbre du compresseur HP, on accoste le compresseur sur le palier; inversement en dévissant l'écrou on repousse le compresseur vers l'arrière car l'écrou est bloqué axialement par le segment

Sur la figure 2, on voit le palier avant montage de l'arbre 4. L'écrou, disposé à l'avant du palier est monté préalablement sur le pignon avant tout montage des éléments par l'arrière du carter intermédiaire. Pour préparer le montage de l'arbre 4, on est amené à chauffer en C le palier 3 afin de le dilater et minimiser les efforts de frettage. Pour éviter de chauffer l'écrou 6 et minimiser les frottements dans le filetage lorsqu'on va le serrer sur l'arbre 4, on dispose une protection thermique P autour de l'écrou. Cependant cette protection est délicate à mettre en oeuvre. Elle ne peut pas être installée de manière efficace.

La demanderesse s'est fixé comme objectif d'éviter les problèmes liés à ce montage.

Plus particulièrement le problème à résoudre concerne un type de liaison entre le compresseur HP et l'IGB moteur permettant le montage et le démontage du compresseur HP avec accès unique des outillages par l'arrière moteur.

L'invention concerne le montage de l'arbre du compresseur HP d'un moteur à double corps dont la prise de puissance pour entraîner le boîtier à engrenages des machines est assurée par un pignon conique solidaire de celui-ci, le manchon appartenant à ce pignon conique d'entraînement.

L'invention est définie par les caractéristiques de la revendication 1.

L'utilisation d'un écrou tendeur permet le démontage du compresseur HP de façon simple, en intervenant uniquement par l'arrière du moteur, et n'est pas remis en cause par les outillages et moyens de montage utilisé couramment.

Le montage / démontage par l'arrière du moteur est un avantage très important pour ce type de moteur et réduit de façon très importante le coût d'une telle opération.

De plus la solution est compacte, elle s'insère dans l'espace disponible et n'interfère pas avec la circulation d'air entre l'IGB et l'arbre BP. La présente demande porte également sur un compresseur et un turbomoteur incorporant le système de l'invention.

On décrit maintenant l'invention plus en détail, en référence aux dessins joints en annexes sur lesquels :

La figure 1 représente en coupe axiale une vue partielle d'une solution de montage correspondant à l'enseignement de l'art antérieur ;

La figure 2 montre les éléments de la figure 1 pré assemblés et avant le montage de l'arbre du compresseur HP ;

La figure 3 représente en coupe axiale une vue partielle d'un système de fixation de l'extrémité de l'arbre du compresseur HP selon l'invention ;

La figure 4 montre la première étape du montage vue côté IGB ;

La figure 5 montre la première étape du montage vue côté de l'arbre du compresseur HP ;

La figure 6 montre la deuxième étape avec l'accostage de l'arbre du compresseur ;

La figure 7 montre l'engagement plus en avant de l'arbre du compresseur ;

La figure 8 montre que le vissage de l'écrou tendeur sur le manchon du palier est terminé et que l'on a mis en place un frein d'écrou.

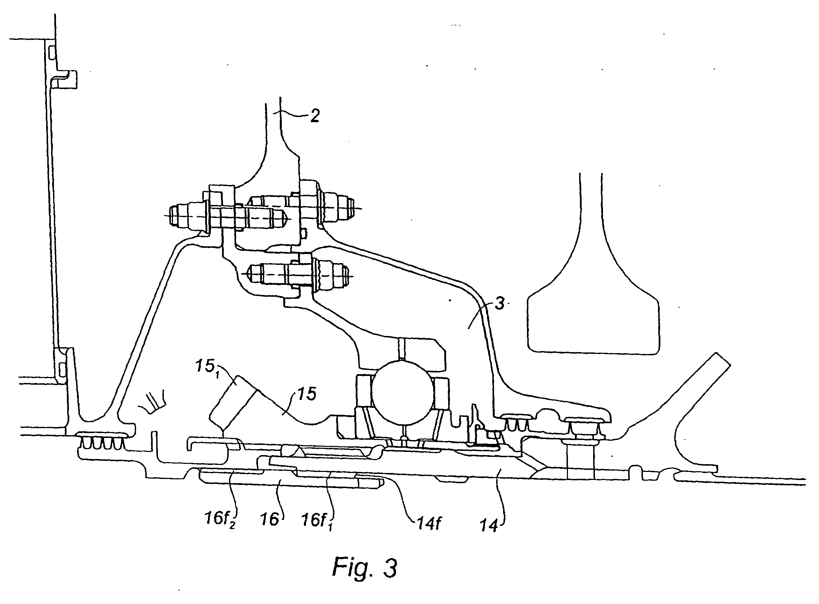

Aux figures 3 et suivantes, on a représenté un mode de réalisation de la solution de l'invention. Le palier 3 reste inchangé par rapport à l'art antérieur tout comme le carter intermédiaire 2. L'extrémité amont de l'arbre 14 comporte comme dans la solution de l'art antérieur un filetage interne 14f, coopérant avec un premier filetage extérieur $16f_1$ d'un écrou 16. Cet écrou 16 est de forme cylindrique et relie l'arbre 14 à une roue conique 15. La roue conique 15 comprend un pignon conique $15_1$ pour l'entraînement de l'IGB. Elle comprend aussi un manchon cylindrique $15_4$ fretté sur la bague intérieure 3i du palier 3. A l'avant la roue 15 est solidaire ici d'un élément de joint à labyrinthe $15_2$ Des cannelures $15_3$ sont ménagées à l'intérieur de la roue conique pour coopérer avec des cannelures $14_3$ sur le tourillon 14 et les maintenir solidaires en rotation. La roue 15 comporte aussi une portion interne de surface avec un filetage 15f avec lequel l'écrou cylindrique 16 coopère par l'intermédiaire d'un second filetage $16f_2$. Les deux filetages $16f_1$ et $16f_2$ sur la face externe de l'écrou 16 sont à pas inversés comme cela est expliqué plus loin.

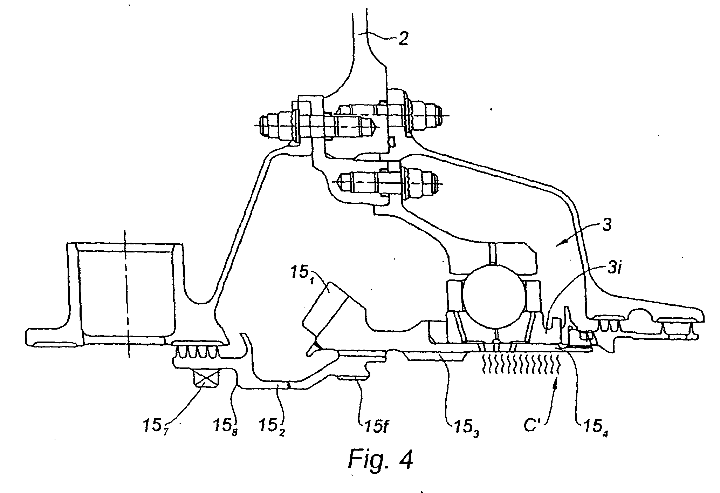

Sur la figure 4, on voit le palier 3 avec la roue conique montée sur la bague 3i intérieure du palier 3 et un moyen de chauffage C' figuré par des traits ondulés

On décrit maintenant, le montage avant de l'arbre du compresseur HP dans le palier 3, en relation avec les figures 4 et suivantes.

Le palier est assemblé avec la roue conique 15 frettée à l'intérieur de la bague 3i du palier. La première étape consiste à chauffer le palier 3 en disposant une chaufferette sous la bague 3i. On perçoit déjà l'avantage de la solution de l'invention car en l'absence d'écrou aucun chauffage parasite ne vient altérer les pièces environnantes.

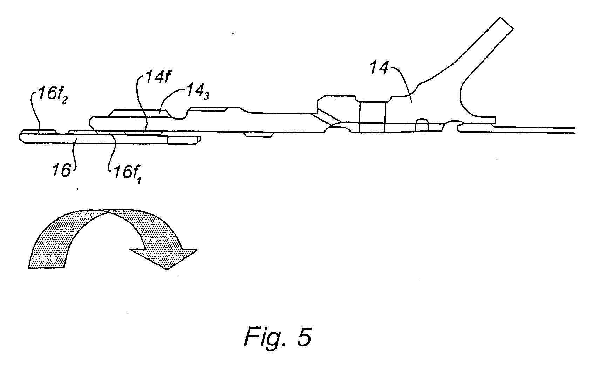

Parallèlement on met en place l'écrou 16 sur l'arbre comme on le voit sur la figure 5. Le filetage 16f1 de l'écrou est engagé dans le filetage interne 14f de l'arbre 14, sur une longueur prédéterminée afin d'avoir un montage final correct.

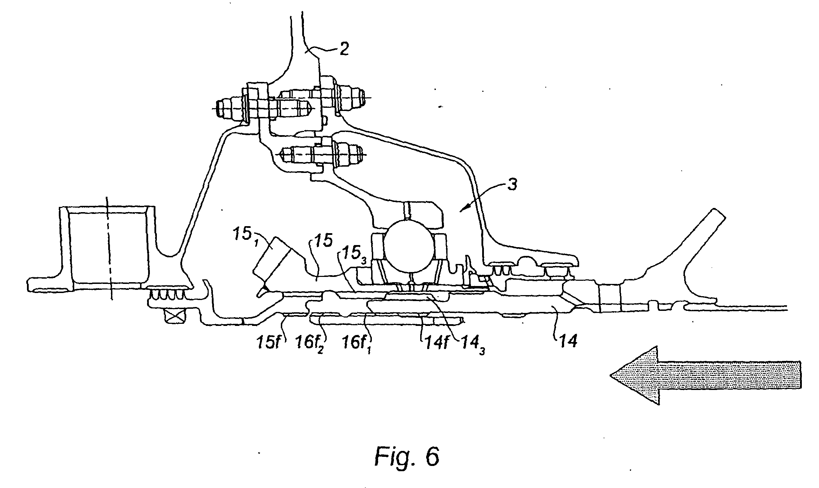

Sur la figure 6, on voit que l'on a engagé l'arbre dans le palier dont on a enlevé la chaufferette et qui est à l'état dilaté. L'écrou 16 a été suffisamment vissé sur l'arbre 14 pour qu'il vienne en butée contre le filetage 15f de la roue conique 15, juste après avoir commencé à engager les cannelures axiales entre l'arbre et la roue conique agencées pour permettre une bonne indexation angulaire entre ces deux pièces, nécessaire au bon fonctionnement de la lubrification du palier $3_=$ On commence à visser l'écrou 16 de manière à engager le filetage $16f_2$ dans le filetage 15f. Comme les pas des filetages $16f_1$ et $16f_2$ sont inversés, en vissant l'écrou on l'introduit progressivement dans la roue 15 qui a été immobilisée en rotation par un moyen approprié non visible. Par ailleurs comme les cannelures $15_3$ de la roue 15 et $14_3$ de l'arbre sont engagées les unes dans les autres, l'arbre 14 est empêché de tourner sur lui-même. La rotation de l'écrou entraîne aussi l'avance de l'arbre à l'intérieur du palier 3.

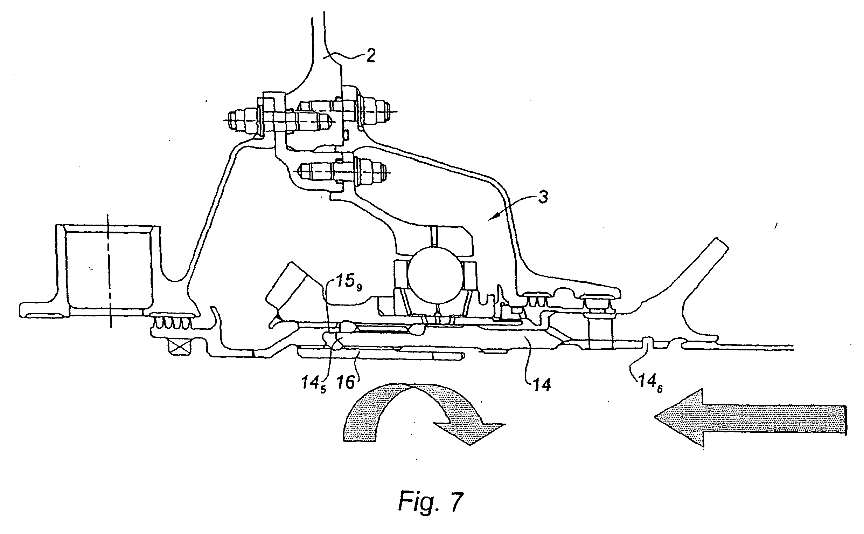

La figure 7 montre que l'avancement de l'arbre 14 a progressé, jusqu'à ce que son bord avant $14_5$ vienne en engagement dans la zone de frettage $15_5$ correspondante à l'intérieur de la roue 15. Cette zone de frettage permet d'assurer un support efficace du pignon $15_1$ conique de la roue 15 par l'arbre 14.

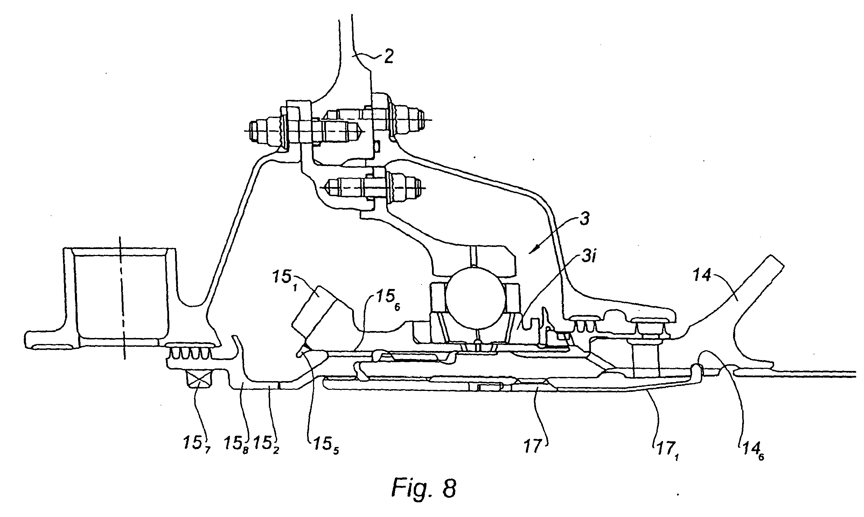

En se reportant à la figure 8, on voit que l'arbre est maintenant en butée contre la pièce formant labyrinthe arrière qui est en appui sur la bague intérieure du palier 3. Un frein d'écrou 17 a été mis en place. Il comporte des branches $17_1$ déformables élastiquement qui viennent se loger dans une gorge $14_6$ ménagée dans l'arbre 14. On observe par rapport à cette figure la présence de la partie avant $15_2$ de la roue conique qui forme avec une écope $15_5$ une surface de réception d'huile de lubrification du pignon $15_1$ et du palier 3. La buse de distribution d'huile n'est pas représentée. Cette huile recueillie par l'écope $15_5$ est guidée à travers des canaux longitudinaux $15_6$ et les cannelures $15_3$ et $14_3$ vers le palier 3 qui est pourvu d'orifices appropriés et connus de lubrification des billes.

L'écrou 16 peut être désigné de tendeur dans la mesure où par sa rotation une tension de traction est exercée sur l'arbre 14. On entraîne l'écrou en rotation par des outils connus à travers l'arbre depuis l'arrière notamment. Pour éviter que des efforts ne transitent par le palier on peut brider axialement la roue conique au moyen d'un outil approprié que l'on place par exemple dans une zone de bridage axial ménagée entre des tenons $15_7$ réalisés à l'avant de la roue pour bloquer toute rotation pendant le montage et un épaulement $15_8$.

## Revendications

1. Agencement comportant un arbre (14) du compresseur HP d'un moteur à turbine à gaz à double corps, un manchon ($15_4$), une roue conique (15) d'entraînement de l'arbre de transmission de la boîte à engrenages des accessoires, un palier (3) de la roue conique (15) et un système de fixation de l'extrémité de l'arbre (14) engagé à l'intérieur du manchon ($15_4$) le manchon étant supporté par le palier (3) de la roue conique (15), le dit système comprenant un écrou (16), ledit écrou (16) comprenant un premier filetage ($16f_1$) par lequel il est vissé à l'intérieur dudit arbre (14) comportant un filetage (14f) et un second filetage ($16f_2$) par lequel il est vissé audit manchon ($15_4$) comportant un filetage (15f), **caractérisé par le fait que** le système comprend en outre un frein d'écrou (17), ménagé dans l'arbre (14).

2. Agencement selon la revendication 1 dont les pas de vis des deux filetages ($16f_1$, $16f_2$) de l'écrou (16) sont inversés l'un par rapport à l'autre.

3. Agencement selon la revendication 1, dont le frein d'écrou (17) comporte des branches déformables ($17_1$) logées dans des gorges ($14_6$) de l'arbre (14).

4. Agencement selon l'une des revendications précédentes dont l'arbre (14) et le manchon ($15_4$) sont guidés l'un dans l'autre par des cannelures ($15_3$, $14_3$) axiales.

5. Agencement selon la revendication précédente dont la roue conique (15) comprend un moyen pour brider le palier axialement pendant le vissage de l'écrou.

6. Procédé de montage de l'agencement selon l'une des revendications précédentes comprenant le chauffage du palier, le montage de l'écrou sur l'arbre puis le vissage de l'écrou formant écrou tendeur.

7. Compresseur de turbomoteur incorporant l'agencement de l'une des revendications 1 à 5.

8. Turbomoteur à double corps comportant l'agencement de l'une des revendications 1 à 5.

## Patentansprüche

1. Anordnung, aufweisend eine Welle (14) des HD-Verdichters eines Zweiwellen-Gasturbinentriebwerks, eine Hülse ($15_4$), ein Antriebskegelrad (15) für die Getriebewelle des Getriebes für Hilfseinrichtungen, ein Lager (3) des Kegelrads (15) und ein System zur Befestigung des Endes der Welle (14), die im Inneren der Hülse ($15_4$) steckt, wobei die Hülse von dem Lager (3) des Kegelrads (15) gehalten wird, wobei das System eine Mutter (16) umfasst, wobei die Mutter (16) ein erstes Gewinde ($16f_1$) umfasst, mit dem sie im Inneren der Welle (14), die ein Gewinde (14f) aufweist, eingeschraubt ist, und ein zweites Gewinde ($16f_2$), mit dem sie an die Hülse ($15_4$), die ein Gewinde (15f) aufweist, geschraubt ist, **dadurch gekennzeichnet, dass** das System ferner eine Mutternsicherung (17) umfasst, die in der Welle (14) vorgesehen ist.

2. Anordnung nach Anspruch 1, bei der die Gewindegänge der beiden Gewinde ($16f_1$, $16f_2$) der Mutter (16) umgekehrt zueinander sind.

3. Anordnung nach Anspruch 1, bei der die Mutternsicherung (17) verformbare Arme ($17_1$) aufweist, die in Aushöhlungen ($14_6$) der Welle (14) aufgenommen sind.

4. Anordnung nach einem der vorhergehenden Ansprüche, bei der die Welle (14) und die Hülse ($15_4$) durch axiale Rillen ($15_3$, $14_3$) ineinander geführt sind.

5. Anordnung nach dem vorhergehenden Anspruch, bei der das Kegelrad (15) ein Mittel zum axialen Befestigen des Lagers während des Anziehens der Mutter umfasst.

6. Verfahren zum Montieren der Anordnung nach einem der vorhergehenden Ansprüche, umfassend das Erwärmen des Lagers, das Anbringen der Mutter auf der Welle und anschließend das Anziehen der Mutter, die eine Spannmutter bildet.

7. Turbomotor-Verdichter, der die Anordnung nach einem der Ansprüche 1 bis 5 beinhaltet.

8. Zweiwellen-Turbomotor, der die Anordnung nach einem der Ansprüche 1 bis 5 aufweist.

## Claims

1. Arrangement comprising a shaft (14) for the HP compressor of a double-bodied gas turbine engine, a sleeve ($15_4$), a bevel gear (15) for driving the transmission shaft of the accessories gearbox, a bearing (3) for the bevel gear (15) and a system for attaching the end of the shaft (14) engaged inside the sleeve ($15_4$), the sleeve being supported by the bearing (3) for the bevel gear (15), said system comprising a nut (16), said nut (16) comprising a first thread ($16f_1$), by means of which it is screwed inside said shaft (14) comprising a thread (14f), and a second thread ($16f_2$), by means of which it is screwed to said sleeve ($15_4$) comprising a thread (15f), **characterised in that** the system further comprises a nut-lock (17), which is arranged in the shaft (14).

2. Arrangement according to claim 1, of which the screw pitches of the two threads ($16f_1$, $16f_2$) of the nut (16) are reversed relative to one another.

3. Arrangement according to claim 1, of which the nut-lock (17) comprises deformable branches ($17_1$) accommodated in the grooves ($14_6$) of the shaft (14).

4. Arrangement according to any of the preceding claims, of which the shaft (14) and the sleeve ($15_4$) are guided into one another by axial splines ($15_3$, $14_3$).

5. Arrangement according to the preceding claim, of which the bevel gear (15) comprises a means for axially clamping the bearing during the tightening of the nut.

6. Method for mounting the arrangement according to any of the preceding claims, comprising the heating of the bearing, the mounting of the nut on the shaft and then the tightening of the nut forming an adjusting nut.

7. Turbine engine compressor incorporating the arrangement in any of claims 1 to 5.

8. Double-bodied turbine engine comprising the arrangement in any of claims 1 to 5.

*Fig. 1*

Fig. 2

Fig. 3

Fig. 4

EP 1 813 770 B1

*Fig. 5*

Fig. 6

Fig. 7

EP 1 813 770 B1

Fig. 8

**EP 1 813 770 B1**